# EUROPÄISCHE PATENTSCHRIFT

(11) **EP 1 012 470 B1**
(45) Veröffentlichungstag und Bekanntmachung des Hinweises auf die Patenterteilung: **05.12.2001**
(21) Anmeldenummer: 98948943.0
(22) Anmeldetag: 09.09.1998
(51) Int. Cl.: F02M 53/00, F02M 55/00, F02M 31/20

(54) **KRAFTSTOFFVERSORGUNGSSYSTEM**
FUEL SUPPLY SYSTEM
SYSTEME D'ALIMENTATION EN CARBURANT

(30) Priorität: 12.09.1997 DE 19740057
(43) Veröffentlichungstag der Anmeldung: 28.06.2000
(73) Patentinhaber: Mannesmann VDO Aktiengesellschaft, 60388 Frankfurt am Main (DE)
(72) Erfinder: ECK, Karl, D-60489 Frankfurt (DE)
(74) Vertreter: Rassler, Andrea, Dipl.-Phys.
(86) Internationale Anmeldenummer: EP9805737
(87) Internationale Veröffentlichungsnummer: WO9914486

(56) Entgegenhaltungen:
- DE-A- 3 825 470
- DE-A- 19 539 885
- FR-A- 2 541 376
- US-A- 3 973 536
- US-A- 4 228 776
- PATENT ABSTRACTS OF JAPAN vol. 017, no. 322 (M-1432), 18. Juni 1993 & JP 05 033741 A (NIPPONDENSO CO LTD), 9. Februar 1993

## Beschreibung

Die Erfindung bezieht sich auf ein Kraftstoffversorgungssystem mit den Merkmalen des Oberbegriffs des Patentanspruchs 1.

Diese Merkmale sind bei einem aus der Praxis bekannten Kraftstoffversorgungssystem für Dieselmotoren vorgesehen (Siehe Z.B. DE-A-19 539 885, oder US-A-4 228 776). Eine im Tank vorgesehene elektrisch angetriebene Kraftstoffpumpe fördert einen veränderlichen Kraftstoffstrom von mehr als 40 l/h mit einem Mindestdruck von 500 hPa (0,5 bar). Sie beliefert über einen Kraftstoffilter eine mechanisch (z. B. von der Nockenwelle) angetriebene Hochdruckpumpe mit einem relativ geringen Betriebs-Vorlaufdruck - hinter dem Filter - von mindestens 1.200 hPa (1,2 bar).

Dieser Lieferstrom darf nach Spezifikation der Hochdruckpumpe nicht wärmer als maximal 100 °C sein. Aus ihm wird mittels eines ersten Druckregelventils über eine Drossel ein Kühl- und Schmierstrom für die Hochdruckpumpe abgezweigt, der ca. 30 bis 50 l/h beträgt und sich durchschnittlich um 5 °C erwärmt.

Die Hochdruckpumpe erzeugt einen Vorlaufhochdruck zwischen ca. 300 und 1350 bar zum Beliefern einer Einspritzleiste mit Injektoren für den Dieselmotor. Mittels eines elektrisch verstellbaren Hochdruck-Regelventils (Proportionalventil) wird der Druck in der Einspritzleiste auf einem vorbestimmbaren veränderlichen Niveau eingesteuert.

Die Hochdruckpumpe wird deshalb so ausgelegt, daß der Einspritzleiste bei Bedarf auch bei niedrigen Drehzahlen vom elektrisch gesteuerten Druckregelventil ein rascher Druckanstieg vom unteren zum oberen Druckwert zuführbar ist.

Bei hohen Motordrehzahlen liegt der Hochdruck-Förderstrom weit über dem Bedarf. Am Hochdruck-Regelventil fällt deshalb eine große Abregelmenge (ca. 60 l/h und mehr) an.

Die Einspritzleiste umfaßt eine Reihe von Injektoren oder Einspritzdüsen, die ihrerseits ebenfalls mittels einer Steuereinrichtung elektrisch ansteuerbar sind. So sind sowohl die Einspritzmengen als auch die Einspritzzeitpunkte eindeutig vorgebbar. Beim bekannten System sind die Injektoren als elektrische Hydraulikventile mit einem hydraulischen Hilfskreislauf ausgeführt. In letzterem fällt beim Öffnen der Ventile ebenfalls eine Abregelmenge (5 l/h, je nach Fahrzeugtyp auch deutlich mehr) an.

Als weitere Restriktion darf die Abregel- oder Rücklaufströmung eine Druckdifferenz von höchstens 600 hPa gegen Atmosphäre haben.

Besonders problematisch ist bei diesem System die beträchtliche Aufheizung der zum Tank über eine Rücklaufleitung zurückzuführenden Abregelmengen gegenüber dem Vorlauf zur Hochdruckpumpe. Dieser Temperaturzuwachs entsteht beim plötzlichen Abbau des von der Hochdruckpumpe gelieferten Drucks am Druckregelventil - allein hier werden mehr als 2 kW Wärmeleistung frei - bzw. an den Injektoren durch phasengleiche Energiewandlung (ohne Verdampfung) des Kraftstoffs.

Um die Rücklauftemperatur möglichst zu vermindern, wird schon der relativ geringfügig erwärmte erwähnte Kühl- und Schmierstrom als Teilstrom der Rücklaufströmung beigemischt. Auch kann man zwischen der Leitung von der Kraftstoffpumpe und dem Rücklauf eine Zweigleitung mit einem Überströmventil (Rückschlagventil) vorsehen, welche bei Überschreiten eines bestimmten Vorlaufdrucks der Kraftstoffpumpe eine noch relativ geringfügig aufgeheizte Kraftstoffmenge führt, die zum Kühlen der Rücklaufströmung verwendbar ist. Man sieht auch einen Kühler im Rücklauf zum Tank vor, dessen Effizienz jedoch durch die Beimischung des Kühlstroms gemindert wird.

Infolge der beträchtlichen Rücklaufmengen mit gemessenen Temperaturen von mehr als 100 °C heizt sich der Tankinhalt trotzdem immer mehr auf, so daß zwangsläufig auch die Vorlauftemperatur der elektrischen Kraftstoffpumpe ansteigt. Diese muß in dieser Konfiguration ständig erheblich mehr Kraftstoff fördern, als an den Injektoren verbraucht werden kann.

Ein grundsätzliches Problem bei Dieselfiltern ist deren Verstopfung bei sehr niederen Temperaturen durch Ausflocken (Paraffinieren) des Kraftstoffs. Diese führt zu erhöhtem Druckabfall am Filter, so daß der Lieferdruck für die Hochdruckpumpe nicht mehr ausreicht. Zur Abhilfe werden schon beheizbare Filter verwendet.

Der Erfindung liegt die Aufgabe zugrunde, ein gattungsgemäßes Kraftstoffversorgungssystem zu verbessern.

Diese Aufgabe wird erfindungsgemäß mit den kennzeichnenden Merkmalen des Patentanspruchs 1 gelöst. Die Merkmale der Unteransprüche geben vorteilhafte Weiterbildungen dieses Gegenstands an.

Die erwähnten Abregelmengen werden nunmehr über jeweils eine eigene Rücklaufleitungen geführt. Die weitaus größere Abregelmenge des Hochdruck-Regelventils wird direkt einem Kühler zugeführt.

Der Abregelstrom der Injektoren kann weiterhin mit dem Schmier- und Kühlstrom von der Hochdruckpumpe vermischt werden. Diese Teilmenge des Rücklaufs kann ebenfalls vor dem Tank einen Kühler durchlaufen, wenn der Abregelstrom der Injektoren im Verhältnis zum Schmier- und Kühlstrom groß ist und somit die Gesamtmenge stark aufgeheizt ist. Bei geringem Rücklauf von den Injektoren (5 l/h) kann man aber auf diesen zweiten Kühler verzichten.

Durch diese Maßnahmen wird der Wirkungsgrad des Kühlers für die Haupt-Rücklaufmenge verbessert. Des weiteren wird der Rücklauf vom Hochdruck-Regelventil nach dem Kühlen nicht bzw. nicht mehr vollständig in den Tank zurückgeführt, sondern zumindest großenteils in die Vorlaufleitung zwischen der Kraftstoffpumpe und der Hochdruckpumpe eingespeist. Damit wird die Kraftstoffpumpe durch Verringerung ihrer Fördermenge deutlich entlastet, so daß eine kleinere und billigere Pumpe verwendet werden kann.

Besonders vorteilhaft wird der Kraftstoffilter mit einer vorgewärmten Kraftstoffströmung beheizt, indem die besagte Rücklaufmenge vor dem Filter in die Vorlaufleitung eingespeist wird. So wird der Filter bei niedrigen Temperaturen vor dem Verstopfen bewahrt, denn hohe Rücklauf-Temperaturen entstehen sehr schnell schon kurz nach dem Motorstart. Man wird den Kühler deshalb so dimensionieren, daß zwar die zulässige Vorlauftemperatur der Hochdruckpumpe nicht überschritten wird, daß aber das Ausflocken des Dieselkraftstoffs sicher verhindert wird.

Durch die Kreislauf-Durchströmung des vorschriftsgemäß gewarteten Filters wird ferner die Hochdruckpumpe mit sehr gründlich gereinigtem Kraftstoff versorgt, so daß ihre Lebensdauer gegenüber herkömmlichen Systemen wächst.

Eine besonders gute und startzeitnahe Ausnutzung der Heizleistung der Rücklaufströmung läßt sich bei niederen Umgebungstemperaturen erzielen, wenn über ein temperaturgesteuertes, insbesondere bei niederen Temperaturen öffnendes Ventil eine Teilmenge am Kühler vorbeigeführt wird. Diese kann einerseits in den Tank, vorzugsweise direkt zum Saugsieb der Kraftstoffpumpe, geführt werden, um auch dieses schnell auf eine ausflockungssichere Betriebstemperatur zu bringen.

Eine startzeitnahe Aufheizung des Kraftstoffilters zwischen Kraftstoffpumpe und Hochdruckpumpe wird erreicht, wenn nach einer weiteren Ausbildung die Ausgänge des Kühlers und des temperaturgesteuerten Ventils über eine Zweigleitung mit einem vom Ventil her durchströmbaren Rückschlagventil verbunden sind.

Zweckmäßig wird man in der Verbindung des Ausgangs des Ventils zum Tank nach dem Abzweig der Zweigleitung eine Drossel vorsehen, damit der in der besagten Zweigleitung von der Kraftstoffpumpe her anstehende Druck bei geöffnetem Rückschlagventil überwunden werden kann.

Führt man zumindest Teilmengen der Ströme der ersten und zweiten Rücklaufleitung nach den Kühlern zusammen und dann gemeinsam zum Tank, so läßt sich eine beträchtliche Verkürzung einer doppelten Leitungsführung erzielen. Das ist besonders im Hinblick auf die übliche räumliche Anordnung des Motors auf der Vorderachse und des Tanks an der Hinterachse sinnvoll.

Weitere Einzelheiten und Vorteile des Gegenstands der Erfindung gehen aus der Zeichnung zweier Ausführungsvarianten und deren sich im folgenden anschließender eingehender Beschreibung hervor.

Es zeigen in vereinfachter Darstellung
Figur 1 eine erste Ausführungsform,
Figur 2 eine zweite Ausführungsform als Detail aus Figur 1.

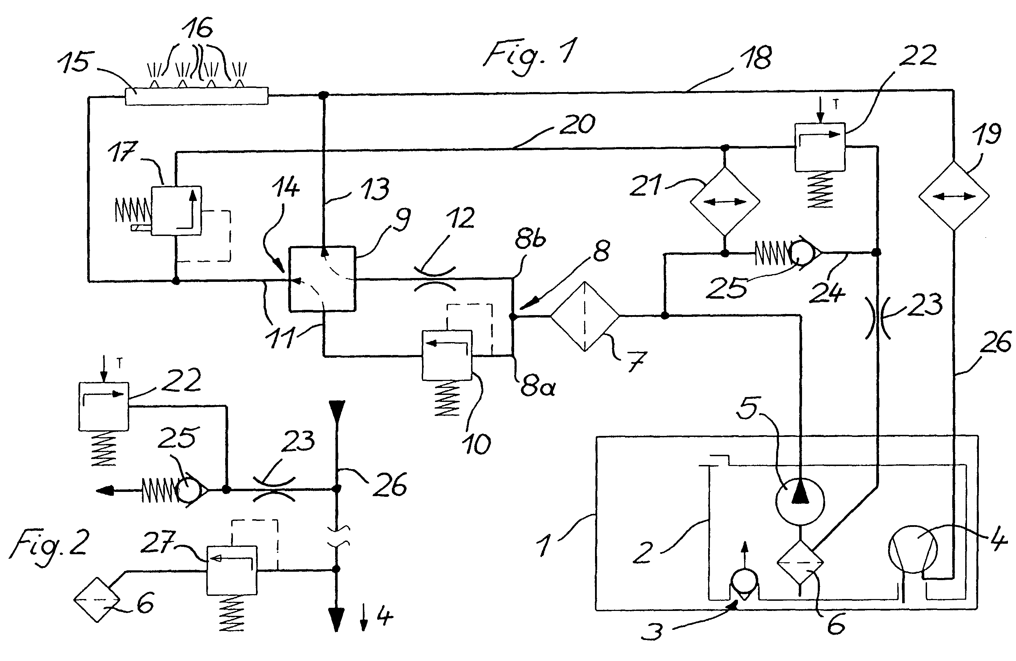

Gemäß Figur 1 ist in einem Tank 1 ein Schwalltopf 2 vorgesehen, der über ein Bodenventil 3 und im Fahrbetrieb zusätzlich mittels einer Saugstrahlpumpe 4 aus dem Tankinhalt nachgefüllt wird. Aus dem Schwalltopf 2 saugt eine elektrisch angetriebene Kraftstoffpumpe 5 über ein Saugsieb 6 Kraftstoff ab und fördert ihn über einen Kraftstoffilter 7 zu einer Verzweigung 8 vor einer hier nur schematisch als Block angedeuteten Hochdruckpumpe 9. Im ersten Zweig 8a ist ein Druckbegrenzungsventil 10 der Saugseite des Hauptstroms 11 der Hochdruckpumpe 9 vorgeschaltet, während im zweiten Zweig eine Drossel 12 einem Schmier- und Kühlstrom 13 der Hochdruckpumpe vorgeschaltet ist.

Der Hauptstrom 11 tritt auf der Druckseite 14 der Hochdruckpumpe aus und gelangt zu einer Einspritzleiste ("Common rail") 15, die mit mehreren Injektoren 16 bestückt ist. Diese sind in nicht näher dargestellter, an sich bekannter Weise als elektrisch ansteuerbare Einspritzdüsen mit einem hydraulischen Hilfskreis ausgeführt. Sie führen einem Verbrennungsmotor, insbesondere einem luftverdichtenden Motor, den benötigten Kraftstoff zu, d. h. hier tritt die tatsächlich vom Motor verbrauchte Kraftstoffmenge aus dem Kraftstoffversorgungssystem aus, während eine - weitaus größere - Überschußmenge nur unter steter Temperaturerhöhung umgewälzt wird.

Der an der Einspritzleiste 15 verfügbare Druck wird mittels eines ebenfalls an die Druckseite 14 der Hochdruckpumpe angeschlossenen Hochdruck-Regelventils 17 bemessen, welches in nicht näher gezeigter Weise elektrisch steuerbar ist. Die hierzu eingesetzte elektronische Auswerte- und Steuereinheit ist nicht Gegenstand der Erfindung, so daß hier nicht näher darauf eingegangen wird.

Sowohl von der Einspritzleiste 15 als auch vom Hochdruck-Regelventil 17 fallen während des Betriebs Abregelmengen an. Diese sind, wie eingangs schon erörtert, gegenüber der Vorlauftemperatur stark aufgeheizt. Schon kurz nach Inbetriebnahme des Verbrennungsmotors treten Temperaturdifferenzen von + 80 °C auf. Hingegen heizt sich der Schmier- und Kühlstrom 13 durch die Hochdruckpumpe bei weitem nicht so stark auf, weil er keinen wesentlichen Druckschwankungen unterworfen ist.

Die Abregelmenge von der Einspritzleiste 15 wird mit dem Schmier- und Kühlstrom vermischt. Diese - schon vorgekühlte - Mischmenge wird über eine erste Rücklaufleitung 18 einem - wie erwähnt, nur bedarfsweise vorhandenen - ersten Kühler 19 zugeführt und nach Abkühlung in an sich bekannter Weise als Treibstrahl der Saugstrahlpumpe 4 genutzt, der sie über eine Leitung 26 - der Fortsetzung der Rücklaufleitung 18 - zugeführt wird. Diese Strömung unterliegt noch einer weiteren Restriktion, denn ihr Druck vor bzw. in der Saugstrahlpumpe darf nicht mehr als 600 hPa über dem Umgebungsdruck liegen.

Die Abregelmenge vom Hochdruck-Regelventil 17 - diese überwiegt mengenmäßig stark den Abregelstrom von der Einspritzleiste 15 - wird über eine zweite Rücklaufleitung 20 einem weiteren Kühler 21 zugeführt. Die beiden Kühler 19 und 21 können abweichend von der Darstellung eine Baueinheit bilden, jedoch bei vollständiger Trennung beider Ströme. Sie sind in der Regel als Kraftstoff-Luft-Wärmetauscher ausgeführt. Ihr Strömungswiderstand ist vernachlässigbar gering.

Parallel zu dem weiteren Kühler 21 ist ein temperaturabhängig schaltbares bzw. temperaturgesteuertes Ventil 22 vorgesehen. Dieses führt bei niederen Umgebungstemperaturen einen Teilstrom der vom Start an stark aufgeheizten Abregelmenge vom Hochdruck-Regelventil 17 am Kühler 19 vorbei über eine Drossel 23 direkt in das Saugsieb 6 der Kraftstoffpumpe 5. Vor der Drossel 23 zweigt eine Zweigleitung 24 mit einem federbelasteten Rückschlagventil 25 zum Ausgang des Kühlers 19 hin ab; wobei das Rückschlagventil 25 nur in Richtung zum Kühler durchlässig ist. Mit dieser Zweigleitung wird erreicht, daß auch der Kraftstoffilter 7 gleich zum Betriebsbeginn beheizt wird, bevor der Kühler 21 wirksam wird. Das Rückschlagventil 25 verhindert, daß der Vorlauf der Kraftstoffpumpe über die Zweigleitung 24 gleich wieder in den Tank zurückgeführt wird.

Das Detail in Figur 2 zeigt einen abgeänderten Ausschnitt aus einer Anordnung wie in Figur 1. Die Änderung betrifft nur die Verbindung von dem temperaturgesteuerten Ventil 22 zum Saugsieb 6, hat aber als Vorteil eine wesentliche Verkürzung einer doppelten Rücklaufleitung durch gemeinsame Nutzung der Leitung 26 zur Folge.

Man hat hier keine eigene Verbindung zwischen dem Saugsieb 6 und dem temperaturgesteuerten Ventil 22 vorgesehen, sondern dessen Abströmung gelangt bei ansonsten gleicher Konstellation über die Drossel in die Leitung 26 zwischen dem ersten Kühler 19 und der Saugstrahlpumpe 4. Letztere ist hier nur durch ihr Bezugszeichen neben einem abwärts weisenden Pfeil repräsentiert. Um einen unzulässig hohen Treibdruck an der Saugstrahlpumpe zu verhindern und die zum Aufheizen des Saugsiebs 6 benötigte Teilmenge abzuzweigen, ist ein weiteres Druckbegrenzungsventil 27 tanknah parallel zur Saugstrahlpumpe vorgesehen. Dieses Ventil 27 läßt bei Druckerhöhung über die schon erwähnte, für die Saugstrahlpumpe zulässige Schwelle von 600 hPa über Umgebungsdruck hinaus den Überschuß zum Saugsieb hin abströmen.

Man erkennt, daß durch diese Variante eine beträchtliche Verkürzung der Doppelführung der Rücklaufleitungen 18 und 20 möglich ist, wenn z. B. wie bei den meisten Kraftfahrzeugen der Motor vorn und der Tank an der Hinterachse angeordnet ist. Sind nämlich die Kühler 19 und 21 motornah angeordnet - die schematische Darstellung in Figur 1 ist nicht repräsentativ für die tatsächliche räumliche Anordnung der Komponenten -, dann ist gemäß Figur 1 eine Doppelführung der Rücklaufleitungen 18 und 20 über mehrere Meter unvermeidlich. Dies wird durch die Variante gemäß Figur 2 vermieden.

## Patentansprüche

1. Kraftstoffversorgungssystem für Dieselmotoren, umfassend
- eine fluidische Reihenschaltung einer aus einem Tank (1) absaugenden Kraftstoffpumpe (5), einem Kraftstoffilter (7) und einer Hochdruckpumpe (9),
- eine dem Hochdruckausgang (14) der Hochdruckpumpe (9) nachgeschaltete Parallelschaltung einer Mehrzahl von Injektoren (16) oder Einspritzdüsen und eines elektrisch steuerbaren Hochdruck-Regelventils, (17) welche Parallelschaltung von der Hochdruckpumpe mit einem Kraftstoffstrom unter durch Ansteuerung des Hochdruck-Regelventils (17) bedarfsabhängig veränderlichem Druck belieferbar ist,
- mindestens eine Rücklaufleitung (18, 20) zum Rückführen eines Kraftstoff-Überschusses von dem Hochdruck-Regelventil und/oder den Injektoren in den Tank (1),
- mindestens einen in der mindestens einen Rücklaufleitung angeordneten Kühler (19, 21),
**dadurch gekennzeichnet, daß** eine erste Rücklaufleitung (18) den Injektoren (16) und eine zweite Rücklaufleitung (20) dem Hochdruck-Regelventil (17) nachgeschaltet ist, und
daß zumindest die zweite Rücklaufleitung (20) mit einem Kühler (21) verbunden ist, der ausgangsseitig an die Verbindung zwischen der Kraftstoffpumpe (5) und der Hochdruckpumpe (9) angeschlossen ist.

2. Kraftstoffversorgungssystem nach Anspruch 1, **dadurch gekennzeichnet, daß** der Kühler (21) ausgangsseitig zwischen der Kraftstoffpumpe (5) und dem Kraftstoffilter (7) in die Vorlaufleitung mündet.

3. Kraftstoffversorgungssystem nach Anspruch 1 oder 2, **dadurch gekennzeichnet, daß** fluidisch parallel zum Kühler (21) der zweiten Rücklaufleitung (20) ein temperaturgesteuertes, insbesondere bei niederen Temperaturen öffnendes Ventil (22) vorgesehen ist.

4. Kraftstoffversorgungssystem nach Anspruch 3, **dadurch gekennzeichnet, daß** der Ausgang des temperaturgesteuerten Ventils (22) mit dem Tank (1) verbunden ist.

5. Kraftstoffversorgungssystem nach Anspruch 3 oder 4, **dadurch gekennzeichnet, daß** der Ausgang des temperaturgesteuerten Ventils (22) zu einem im Tank (1) angeordneten Saugsieb (6) der Kraftstoffpumpe (5) geführt ist, um dieses zu beheizen.

6. Kraftstoffversorgungssystem nach Anspruch 3, 4 oder 5, **dadurch gekennzeichnet, daß** die Ausgänge des Kühlers (21) und des temperaturgesteuerten Ventils (22) über eine Zweigleitung (24) mit einem vom Ventil (22) her durchströmbaren Rückschlagventil (25) verbunden sind.

7. Kraftstoffversorgungssystem nach Anspruch 6, **dadurch gekennzeichnet, daß** in der Verbindung des Ausgangs des Ventils (22) zum Tank (1) nach dem Abzweig der Zweigleitung (24) eine Drossel (23) vorgesehen ist.

8. Kraftstoffversorgungssystem nach einem der vorstehenden Ansprüche, **dadurch gekennzeichnet, daß** auch in die zum Tank (1) führende erste Rücklaufleitung (18) ein Kühler (20) eingebaut ist.

9. Kraftstoffversorgungssystem nach einem der vorstehenden Ansprüche, **dadurch gekennzeichnet, daß** die Ströme der ersten und zweiten Rücklaufleitung (18, 20) hinter einem Kühler (19) zumindest in Teilmengen in einer gemeinsamen Leitung (26) zusammengeführt sind.

10. Kraftstoffversorgungssystem nach den Ansprüchen 4 und 9, **dadurch gekennzeichnet, daß** der Ausgang des temperaturgesteuerten Ventils (22) über eine Drossel (23) an die zwischen dem ersten Kühler (19) und dem Tank (1) verlaufende gemeinsame Leitung (26) angeschlossen ist.

11. Kraftstoffversorgungssystem nach den Ansprüchen 5 und 10, **dadurch gekennzeichnet, daß** an die zur Saugstrahlpumpe (4) führende Leitung (26) ferner ein Druckbegrenzungsventil (27) mit niederer Schaltschwelle angeschlossen ist, dessen Ausgang mit dem Saugsieb (6) der Kraftstoffpumpe (5) verbunden ist.

12. Kraftstoffversorgungssystem nach Anspruch 8, **dadurch gekennzeichnet, daß** die Kühler (19, 21) zu einer Baueinheit mit getrennten Kühlströmen zusammengefaßt sind.

## Claims

1. Fuel supply system for diesel engines, comprising
- a fluidic series connection of a fuel pump (5) sucking out of a tank (1), of a fuel filter (7) and of a high-pressure pump (9),
- a parallel connection, located downstream of the high-pressure outlet (14) of the high-pressure pump (9), of a plurality of injectors (16) or injection nozzles and of an electrically controllable high-pressure regulating valve (17), said parallel connection being capable of being fed by the high-pressure pump with a fuel stream under a pressure which is variable, as required, by the activation of the high-pressure regulating valve (17),
- at least one return line (18, 20) for recirculating a fuel excess from the high-pressure regulating valve and/or the injectors into the tank (1),
- at least one cooler (19, 21) arranged in the at least one return line,
**characterized in that** a first return line (18) is located downstream of the injectors (16) and a second return line (20) downstream of the high-pressure regulating valve (17), and
**in that** at least the second return line (20) is connected to a cooler (21) which is connected on the outlet side to the connection between the fuel pump (5) and the high-pressure pump (9).

2. Fuel supply system according to Claim 1, **characterized in that** the cooler (21) opens on the outlet side into the forward-flow line between the fuel pump (5) and the fuel filter (7).

3. Fuel supply system according to Claim 1 or 2, **characterized in that** a thermally controlled valve (22) which, in particular, opens at low temperatures is provided fluidically parallel to the cooler (21) of the second return line (20).

4. Fuel supply system according to Claim 3, **characterized in that** the outlet of the thermally controlled valve (22) is connected to the tank (1).

5. Fuel supply system according to Claim 3 or 4, **characterized in that** the outlet of the thermally controlled valve (22) is led to a suction screen (6), arranged in the tank (1), of the fuel pump (5), in order to heat said suction screen.

6. Fuel supply system according to Claim 3, 4 or 5, **characterized in that** the outlets of the cooler (21) and of the thermally controlled valve (22) are connected via a branch line (24) to a nonreturn valve (25) through which the flow can pass from the valve (22).

7. Fuel supply system according to Claim 6, **characterized in that** a throttle (23) is provided, downstream of the branch point of the branch line (24), in the connection of the outlet of the valve (22) to the tank (1).

8. Fuel supply system according to one of the preceding claims, **characterized in that** a cooler (20) is also built into the first return line (18) leading to the tank (1).

9. Fuel supply system according to one of the preceding claims, **characterized in that** the streams of the first and second return lines (18, 20) are brought together downstream of a cooler (19), at least in part quantities, in a joint line (26).

10. Fuel supply system according to Claims 4 and 9, **characterized in that** the outlet of the thermally controlled valve (22) is connected via a throttle (23) to the joint line (26) running between the first cooler (19) and the tank (1).

11. Fuel supply system according to Claims 5 and 10, wherein, furthermore, a pressure relief valve (27) with a low switching threshold is connected to the line (26) leading to the suction jet pump (4), the outlet of said pressure relief valve being connected to the suction screen (6) of the fuel pump (5).

12. Fuel supply system according to Claim 8, **characterized in that** the coolers (19, 21) are combined into a structural unit with separate cooling streams.

## Revendications

1. Système d'alimentation en carburant pour moteurs diesel, comprenant :
- un raccordement en série par fluide d'une pompe à carburant (5) aspirant du carburant d'un réservoir (1), d'un filtre de carburant (7) et d'une pompe haute pression (9),
- un raccordement en parallèle raccordé en aval de la sortie haute pression (14) de la pompe haute pression (9), d'une pluralité d'injecteurs (16) ou gicleurs et d'une soupape de réglage haute pression (17) pouvant être commandée électriquement, lequel raccordement en parallèle peut être alimenté en un flux de carburant au moyen de la pompe haute pression sous pression variable en fonction des besoins par commande de la soupape de réglage haute pression (17),
- au moins une conduite de retour (18, 20) pour renvoyer un excès de carburant de la soupape de réglage haute pression et/ou des injecteurs dans le réservoir (1),
- au moins un refroidisseur (19, 21) disposé dans la au moins une conduite de retour;
**caractérisé en ce qu'**une première conduite de retour (18) est raccordée en aval des injecteurs (16) et une seconde conduite de retour (20) en aval de la soupape de réglage haute pression (17), et
**en ce qu'**au moins la seconde conduite de retour (20) est reliée à un refroidisseur (21) qui est raccordé, côté sortie, à la liaison entre la pompe à carburant (5) et la pompe haute pression (9).

2. Système d'alimentation en carburant selon la revendication 1, **caractérisé en ce que** le refroidisseur (21) débouche, côté sortie, entre la pompe à carburant (5) et le filtre à carburant (7) dans la conduite aller.

3. Système d'alimentation en carburant selon la revendication 1 ou 2, **caractérisé en ce qu'**il est prévu, en parallèle sur le plan du fluide au refroidisseur (21) de la seconde conduite de retour (20), une soupape (22) commandée par la température, qui s'ouvre en particulier aux basses températures.

4. Système d'alimentation en carburant selon la revendication 3, **caractérisé en ce que** la sortie de la soupape (22) commandée par la température est raccordée au réservoir (1).

5. Système d'alimentation en carburant selon la revendication 3 ou 4, **caractérisé en ce que** la sortie de la soupape (22) commandée par la température est menée à un tamis d'aspiration (6) de la pompe à carburant (5) disposé dans le réservoir (1) pour le chauffer.

6. Système d'alimentation en carburant selon la revendication 3, 4 ou 5, **caractérisé en ce que** les sorties du refroidisseur (21) et de la soupape (22) commandée par la température sont raccordées, par le biais d'une conduite de dérivation (24), à une soupape de non retour (25) qui peut être parcourue par un flux issu de la soupape (22).

7. Système d'alimentation en carburant selon la revendication 6, **caractérisé en ce qu'**il est prévu un étranglement (23) dans la liaison de la sortie de la soupape (22) au réservoir (1) après le branchement de la conduite de dérivation (24).

8. Système d'alimentation en carburant selon l'une quelconque des revendications précédentes, **caractérisé en ce qu'**un refroidisseur (20) est également incorporé dans la première conduite de retour (18) menant au réservoir (1).

9. Système d'alimentation en carburant selon l'une quelconque des revendications précédentes, **caractérisé en ce que** les flux de la première et de la seconde conduites de retour (18, 20) sont réunis en une conduite commune (26) en aval d'un refroidisseur (19) au moins en quantités partielles.

10. Système d'alimentation en carburant selon les revendications 4 et 9, **caractérisé en ce que** la sortie de la soupape (22) commandée par la température est raccordée, par le biais d'un étranglement (23), à la conduite commune (26) s'étendant entre le premier refroidisseur (19) et le réservoir (1).

11. Système d'alimentation en carburant selon les revendications 5 et 10, **caractérisé en ce que** l'on raccorde en outre, sur la conduite (26) menant à l'éjecteur (4), une soupape de limitation de pression (27) à seuil bas d'enclenchement, dont la sortie est raccordée au tamis d'aspiration (6) de la pompe à carburant (5).

12. Système d'alimentation en carburant selon la revendication 8, **caractérisé en ce que** les refroidisseurs (19, 21) sont regroupés en une unité structurelle avec des flux de refroidissement séparés.
